# EUROPEAN PATENT SPECIFICATION

(11) **EP 4 290 089 B1**
(45) Date of publication and mention of the grant of the patent: **04.03.2026**
(21) Application number: 22211375.5
(22) Date of filing: 05.12.2022
(51) Int. Cl.: F16C 11/04, B63B 27/14

(54) **VESSEL WITH BATHING PLATFORM**
SCHIFF MIT BADEPLATTFORM
NAVIRE AVEC PLATE-FORME DE BAIN

(30) Priority: 10.06.2022 EP 22178509
(43) Date of publication of application: 13.12.2023
(73) Proprietor: Oy Nautor Ab, 68600 Pietarsaari (FI)
(72) Inventor: FERRAGAMO, Leonardo, 68600 Pietarsaari (FI); GALGANI, Giovanni, 68600 Pietarsaari (FI); FRERS, German, 68600 Pietarsaari (FI); GOMISCECH, Massimiliano, 68600 Pietarsaari (FI); MEDINA, Juan David, 68600 Pietarsaari (FI)
(74) Representative: CH Kilger Anwaltspartnerschaft mbB

(56) References cited:
- WO-A1-2008/138151
- WO-A1-2015/132725
- DE-U1- 202009 007 144
- US-B1- 10 399 645

## Description

### FIELD OF THE INVENTION

The present invention relates to the field of recreational watercrafts preferably sail boats, and more in detail it relates to a structure of stern of a watercraft having a swim platform or swim deck, which is adapted for users who wish to stay on it, or who wish to descend or to plunge into water or go back up the watercraft after a swim, or also to go on board a rubber boat or tender during stops of a trip, wherein the platform is formed in parts at least from the deck of the watercraft.

### BACKGROUND OF THE INVENTION

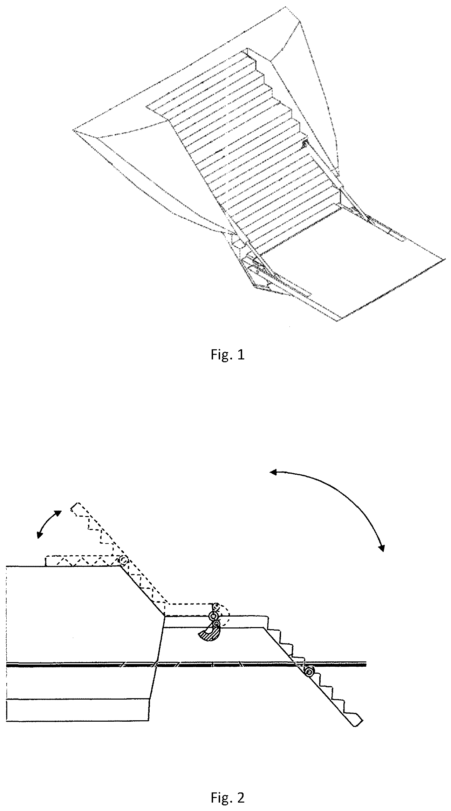

WO 2017/187369 discloses (see Fig. 1) a structure of stern (1) of a watercraft, comprising a fixed part (10) comprising a stern portion of said watercraft, said fixed part (10) having a first staircase portion (15), said fixed part having a guide a movable part (20) having a second staircase portion (21), said movable part (20) arranged to slidingly engage with said guide, in order to move with respect to the fixed part (10) between a first raised position, in which said movable part (20) covers the first staircase portion (15) of said fixed part (10), and a second lowered position in which said movable part (20) uncovers the second staircase portion (21) of said fixed part (10); a platform (30) pivotally connected to said movable part (20), and arranged to move between a first position, in which said platform (30) covers said second staircase portion (21), and a second position in which said platform (30) extends along a horizontal plane and protrudes from said movable part (20) opposite to said watercraft, in order to form a swimming platform or other floor. In this structure, the bathing platform is fairly small and the space created is taken up by the staircase.

WO 2011/137548 discloses (see Fig. 2) fold-out stern lowering means (1) with at least two offsets, which is mounted on the stern (2) of a watercraft by means of the base platform (15) and has a bathing platform (3) which, on the rear side, constitutes an area (A) as bathing platform surface (7) and has a rear wall (4) which, on the rear side, constitutes an area (B), a stairway (8) and/or a ramp (8a) or walk-on surface and has a folding cover (16) with a control cylinder (17) and a lying position (5) and, on the rear side, constitutes an area (C), a standing surface (9) or an additional stairway (12), and the stern lowering means (1) is activated by a lifting means (24) which is supported by spring means.

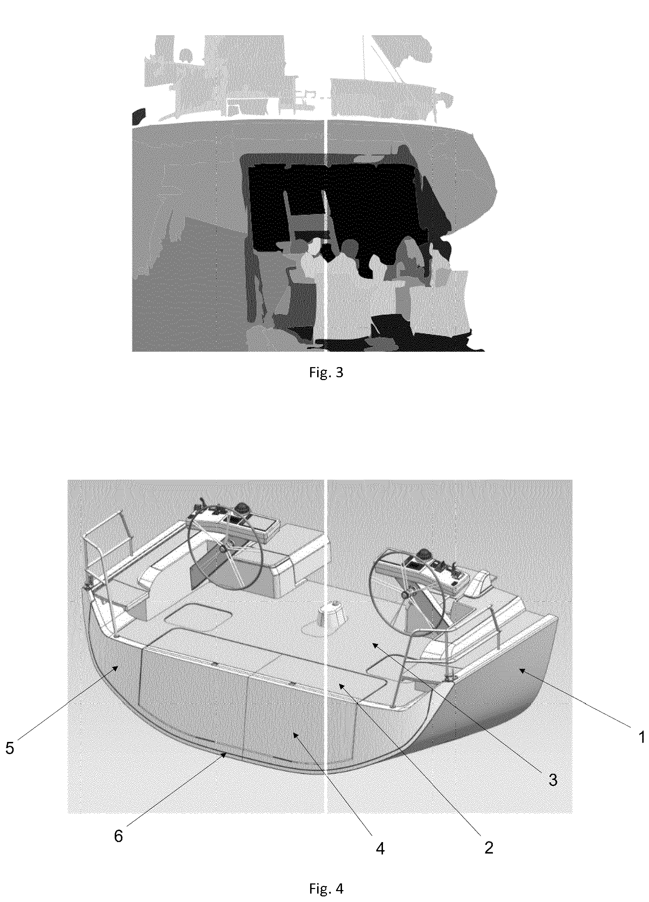

The problem with these and other designs is that the user is "outside" of his/her vessel when using the platform; see Fig. 3.

CN202213697U discloses an integrated invisible watertight gangway ladder comprises a small door plate, an upper ladder and a lower ladder. A simulated hull at an opening position of the gangway ladder is connected with a watertight gate through a watertight gate hinge, one end of a small door plate hinge is connected with the watertight gate, the other end of the small door plate hinge is connected with the small door plate, the upper ladder is arranged on the upper surface of the small door plate, the lower end of the upper ladder is connected with the lower ladder, the lower end of the lower ladder is connected with a lower platform, a control cabinet and a winch component are arranged on the inner side of the hull, and a steel wire rope is arranged on the winch component, passes through an upper pulley component, a pulley component arranged on the watertight gate, a pulley on the upper ladder and a pulley on the lower ladder in sequence and finally is connected with a tension controller after returning. The integrated invisible watertight gangway ladder has the advantages of small occupied space, convenience in operation and maintenance, high reliability and the like, and solves the problems of going up and down of personnel on ships and warships, entering of water at side openings due to shipping sea, and radar wave intense concave cavity reflection at the side openings, so that invisibility of the ships and warships is realized, and the requirements on opening sealing and water tightness are met.

WO2015132725 discloses a submersible transom. The size of the platform is limited by the size of the transom and the opening is "garage" like leaving no free view to the sky.

In US20210047005A1 a submersible platform is part of pre-existing platform.

DE 202009007144 U1 discloses a platform lift for attachment to a watercraft, preferably to the stern, pivotably connected to the remaining platform, for temporary accommodation and for launching and retrieving a dinghy and as an embarkation and disembarkation aid.

WO 2008/138151 A1 discloses a double-carrier platform for watercraft with a lifting and lowering mechanism. The carrier platform is hinged and unfolded before lowering.

US 10399645 B1 discloses a manual, submersible auxiliary swim platform for a vessel with a recessed area in the main aft platform, secured by two bracket assemblies, each consisting of a first bracket member, a second bracket member, and a bushing.

Some types of watercrafts, in order not to change the aesthetic appearance of the stern region, especially sail yachts of average or large size, can have the stern with a swimming platform that is concealed, obtained by tilting or drawing out a part of the transom, to make a protruding platform that can be used a swimming platform, for example, as described in EP2152567.

It would, however, be preferable to be able to be also "inside the vessel" and on the platform without the need of a staircase. In such a scenario, there would be free and unhindered access to the bathing platform from inside the vessel without the need of a staircase when the platform is extended and opened. In most designs the platform is made up of the parts or all the transom, thereby determining the size of the platform. It would however likewise be preferable if the platform could be extendable in size over that of the transom size thereby providing for a spacious platform. This unsolved problem is visible also in Fig. 3. While in some large motor vessels the stern area of the vessel may be resending, in sailing yachts the stern area of the yacht is needed for the afterguard during sailing and for the placement of a room or locker below the deck.

The shortcomings of the prior art where tenders are outside are seen in the following examples:
- the weight of the tender hangs under the davits and there can be a left-right shifting of weight on movement of the stem, which can cause cracking or separation of the davits from the transom. This can cause serious damage to the fiberglass, loss of the tender, or even loss of the vessel if the damage caused leads to a penetration of water into the vessel interior; hence, the tender should be in the boat;
- access and use of the aft platform and passing over onto land are hindered, as the tender is secured laterally across the stem; Hence, the tender should be in the boat.

If the tender is in the boat it will likely take up all if not a large part of the transom when the transom is lowered to the water. These prior art stern constructions leave no place for the bathing people. Ideally, the platform is large and can handle the dinghy and the bathing sailors. But prior art platforms are known to be small and reduced to the size of the transom.

Also, the bathing platforms known in the art do not allow an easy maneuvering of the dinghy either when the boat is stationary or during the navigation due to their limited surface.

### SUMMARY OF THE INVENTION

The present invention provides for flexible solution wherein the stern part may have a "garage" like structure or be open on the top. The tender is within the boat leaving a clean deck look. Some bathing platforms may be enlarged by the provision of foldable additional portions found therein. Here, the transom would be made up of additional material and platforms folded into the back part of the vessel. But, for sail boats this has the drawback that a lot of additional weight is created. Especially sail boats are very weight sensitive. The balance of the boat may not be burdened by a heavy transom construction.

In the present invention, the moveable deck portion (2) forms part of the bathing platform. Hence, the bathing platform may be enlarged without extra weight. This solves the problem of finding a place for the dinghy and the bathing people.

Furthermore, the bathing platform obtained by the opening of the movable second deck portion (2) and the transom portion (4) provide assistance in maneuvering the dinghy behind the stern of a vessel.

According to one aspect not being part of the claimed invention, disclosed herein is a structure of a stern (1) of a vessel, comprising a fixed part (6) configured as a stern portion of said vessel and, comprising a first fixed deck portion (3), and a movable second deck portion (2),
a. wherein the movable second deck portion (2) is pivotally connected to a transom portion (4), which in turn at its base is pivotally connected to the fixed part (6) of the vessel,
b. wherein the transom portion (4) is pivotally folded away to a horizontal position either together with said movable second deck portion (2) or separate from said movable second deck portion (2) depending on whether the connection between the movable second deck portion (2) and the transom portion (4) is in place or not in place,
c. wherein, if both the transom portion (4) and the moveable second deck portion (2) are lowered together, they form a large platform, and
d. wherein one or more hinges (35) connecting the movable second deck portion (2) with the transom portion (4) is an actuator hinge.

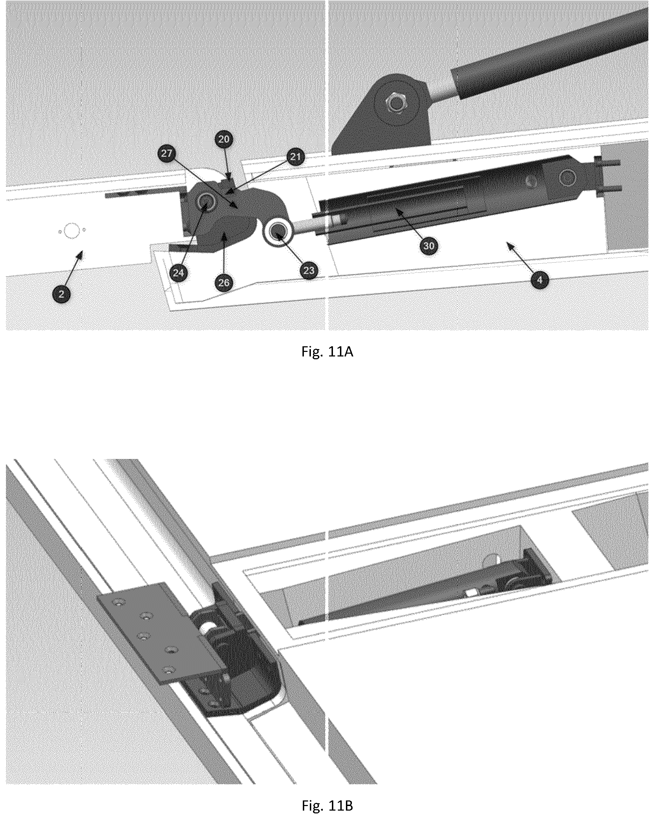

Herein, an "actuator hinge" means that an actuator is not connected at a separate position to the moving hinge part but is connected directly to the hinge itself (see element (23) in Fig. 11).

The invention also relates to a vessel, be it a motorboat or a sailing vessel comprising said structure of a stern.

Herein, the term "deck" refers to the part of the vessel that is substantially horizontal, located on the top side of the vessel and used to walk on. It is a covering over the hull. Preferably, the bottom, *i.e.,* the outside visible part when deployed, or when closed inner face of the moveable deck portion (2) is made of the same material as the inside of the transom portion (4). Then when deployed both will look like one piece, for example, both will display a teak structure. Of course, the structural elements might be carbon (better composite material or aluminum) or the like in order to keep the weight low.

Herein, the expression "moveable deck portion (2)" is a part or all of the afterdeck. It may also be referred to as the aft deck or sometimes A deck.

Herein the "transom portion (4)" is the vertical reinforcement which strengthens the stern of the boat or vessel. It is the planking forming the stern of a square-ended vessel. This flat termination of the stern is typically above the waterline. The term was used as far back as Middle English in the 1300s, having come from Latin transversus (transverse) via Old French traversain (set crosswise). The transom of the vessel is typically vertical. It can be raked such that there is an overhang above the water, as at the bow. A reverse transom is angled from the waterline forwards.

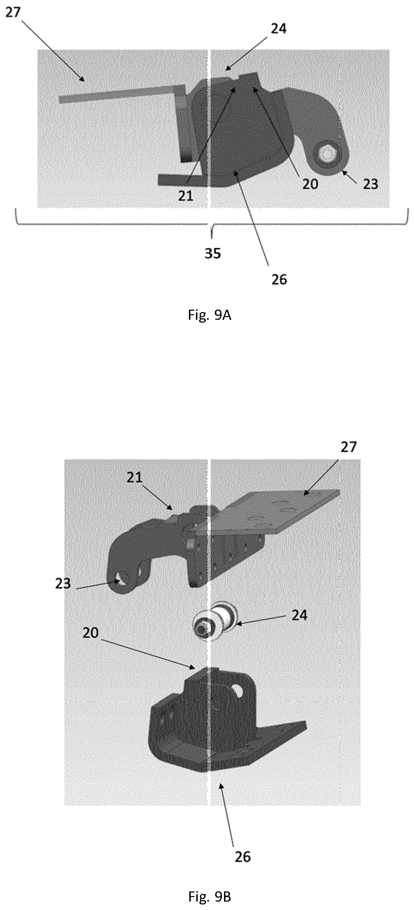

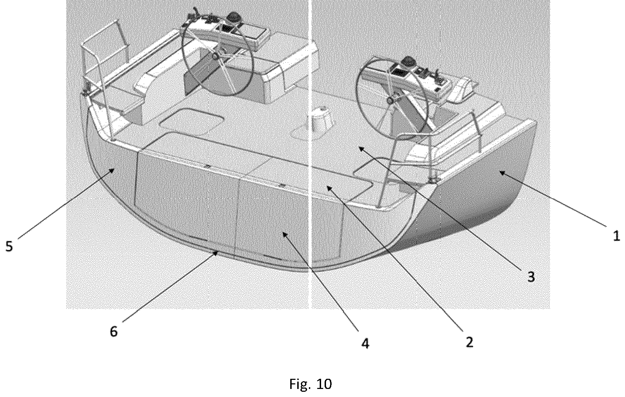

According to another aspect, disclosed herein is a door system in a stern portion of a vessel preferably a sailing vessel (1-Fig.10) comprising:
a. a first platform element (2-Fig.10) comprising a portion of the deck of the vessel (3-Fig.10),
b. a second platform element (4-Fig.10) comprising a portion of the transom of the vessel (5-Fig.10), connected by a system of hinges (35, 45) connecting:
   i. the first platform element (2-Fig.10) to the second platform element (4-Fig.10),
   ii. the second platform element (4-Fig.10) to a portion of a hull in an aft position of the vessel (6-Fig.10), wherein the system of hinges (35-Fig.9A) comprises a first member (26-Fig.9A) pivotally connected to a second member (27-Fig.9A) by means of a tubular shaft (24-Fig.9B), wherein the first member (26-Fig.9A) comprises a first protrusion (20-Fig.9B) and the second member (27-Fig.9A) comprises a second protrusion (21-Fig.9B), wherein the first member (26-Fig.9A) is a fixed member and the second member (27-Fig.9A) is a movable member, wherein the first protrusion (20-Fig.9B) and the second protrusion (21-Fig.9B) determine the opening of the system of hinges (35-Fig.9A) to about 90 degrees.

According to another aspect not being part of the claimed invention, disclosed herein is a door system in a stern portion of a vessel (1) comprising:
a. a first element (2) comprising a portion of a deck of the vessel (3),
b. a second element (4) comprising a portion of a transom of the vessel (5),
c. a first system of hinges (35) connecting:
   i. the first element (2) to the second element (4),
d. a second system of hinges (45) connecting:
   ii. the second element (4) to a portion of a hull in an aft position of the vessel (6),

wherein the system of hinges (35) comprises a first member (26) pivotally connected to a second member (27) by means of a tubular shaft (24),
wherein the first member (26) comprises a first protrusion (20) and the second member (27) comprises a second protrusion (21),
wherein the first member (26) is a fixed member and the second member (27) is a movable member,
wherein the first element (2) in a closed position forms a planar surface with the deck of the vessel (3) and in an open position forms a planar surface with the second element (4),
wherein the second element (4) in a closed position forms a planar surface with the transom of the vessel (5) and in an open position forms a planar surface with a floor (41) in an aft position of the vessel.

According to another aspect not being part of the claimed invention, disclosed herein is a system of hinges (35) comprising:
a. a first member (26) pivotally connected to a second member (27) by means of a tubular shaft (24),

wherein the first member (26) comprises a first protrusion (20) and the second member (27) comprises a second protrusion (21),
wherein the first member (26) is a fixed member and the second member (27) is a movable member,
wherein the first protrusion (20) and the second protrusion (21) determine the opening of the system of hinges (25) to form a planar surface.

### DETAILED DESCRIPTION OF THE INVENTION

As can be seen in the figures the two frame members (2) and (4) are pivotably connected to the vessel, at the second swing axis, the hinge connecting transom and vessel. The frame members again have a first swing axis, with a hinge connecting them.

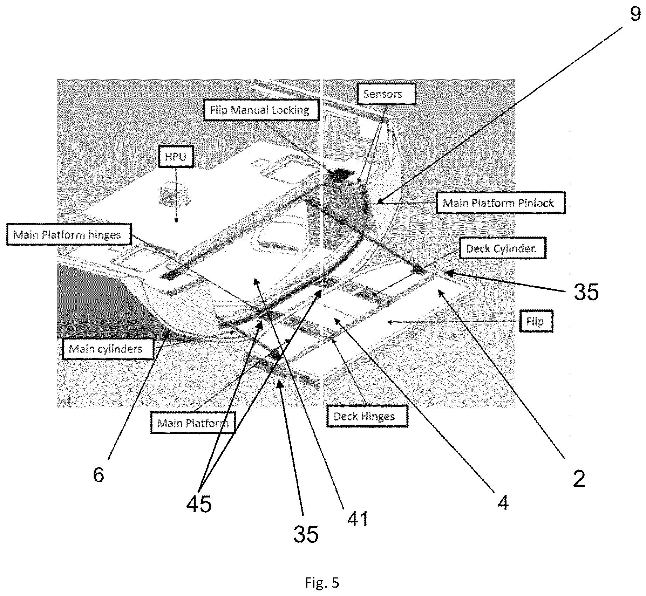

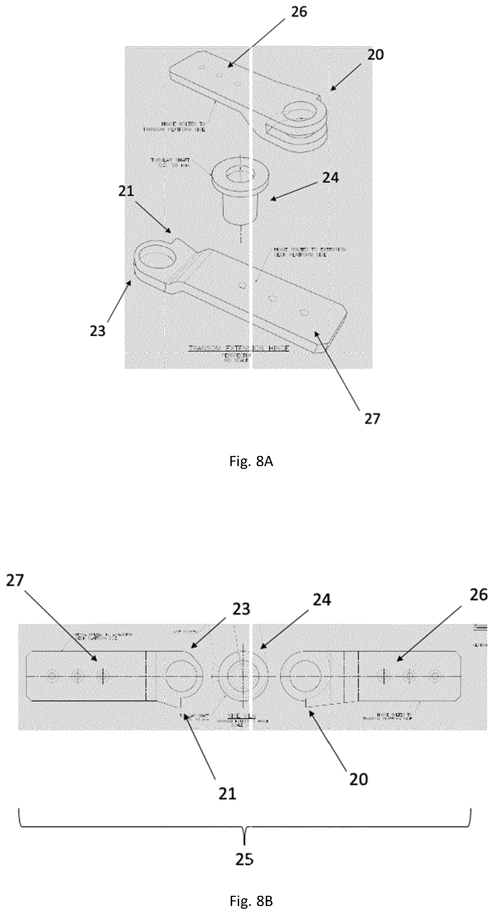

As can be seen in Figures 8A and 8B usually a certain type of hinges is used for a door connection. In this case a separate cylinder is used to open or close such a door. Figure 5 shows the essence of the invention. The entire transom is opened with the aid of the main cylinders which are attached to the end to the inside portion of the transom. The movable deck portion is attached to the transformer with a very special type of hinge. This hinge is both hidden as well as connected to a special hidden cylinder which is also hidden within the transom. The movable deck portion (2) then rotates outwards to form a large platform. The special hinge is shown in particular in Figure 9A and 9B. Fig. 9A shows the connection (23) between the cylinder (not shown) which is used to rotate the movable platform (2). The connection between the movable platform three and the cylinder is movable by means of screw (23). As it is apparent from the comparison of Figure 8A and 9A one of the essential differences between the hinges is that the hinge that was first tested has a un-coupled cylinder whereas as seen in Figure 9A the cylinder used to rotate platform is actually attached to the hinge. Hence in a preferred embodiment, the invention comprises a hinge connecting trends in form and platform, wherein, the hinge has a connection point for an actuating cylinder.

The invention relates to a structure of a stern (1) of a vessel, comprising a fixed part (6) configured as a stern portion of said vessel and, comprising a first fixed deck portion (3), and a movable second deck portion (2),
a. wherein the movable second deck portion (2) is pivotally connected to a transom portion (4), which in turn at its base is pivotally connected to the fixed part (6) of the vessel,
b. wherein the transom portion (4) is pivotally folded away to a horizontal position either together with said movable second deck portion (2) or separate of said second deck portion depending on whether the connection between the movable second deck portion (2) and the transom portion (4) is in place or not in place,
c. wherein if both the transom portion (4) and the moveable second deck portion (2) are lowered together, they form a large platform, and
d. wherein the one or more hinges (35) connecting the movable second deck portion (2) with the transom portion (4) is an actuator hinge.

A great benefit of this invention is that while sailing and under way the aft part of the deck, *i.e*., the part we refer to as the movable second deck portion (2) is in line and at the same height as the rest of the deck, creating a flush deck. This ensures less steps and thereby less risk of injury.

It is therefore preferred if both the first deck portion (3) and the second moveable deck portion (2) create a so-called flush deck, *i.e.,* a continuous unbroken deck from bow to stern. In any case, both form the so-called upper deck and as such also the weather deck.

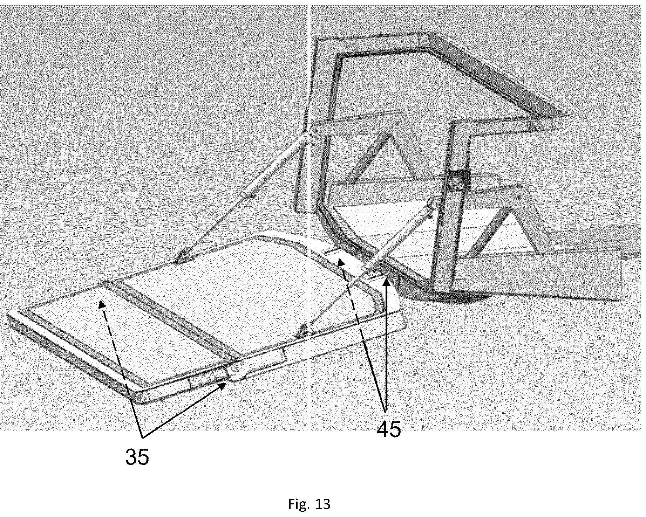

Preferably, said second moveable deck portion (2) is pivotally and fixed connected to the transom portion (4), and wherein if both the transom portion (4) and the moveable second deck portion (2) are lowered together, they form a large platform (see, for example, Figure 13). In this alternative there is a fixed connection between moveable deck portion (2) and transom portion (4). This might be cheaper to build and is an alternative for some sailors that will always want to use the large platform.

One of the advantages of the invention is the creation of a large aft bathing platform. So, in a preferred embodiment said second moveable deck portion (3) represents 3% of the entire upper deck of said vessel, 5% of the entire deck of said vessel, 10% of the entire deck of said vessel, 20% of the entire deck of said vessel, or between 20% and 30% of the entire deck of said vessel.

Preferably, the upper deck is flush deck.

Ideally, the angle of transom portion (4) to the moveable deck portion (2) may be adjusted independently from the angle of the transom portion (4) to the fixed part (6). So, in this case, both moveable deck portion (2) and transom portion (4) may not be in line but have an angle of 30%, 45%, 90% or the like to one another. Various applications might require that, such as landing the dinghy or deploying aqua toys.

In a further preferred embodiment, the moveable deck portion (2) may be folded together with the transom portion (4) to form a small platform so that the moveable deck portion (2) and the transom (4) are substantially parallel to one another. In this embodiment, the sailor has an open bow space aft and a small platform.

Preferably the vessel is a pleasure craft. It may a motorboat or a sailing vessel. Preferably, the vessel is a sailing vessel or a motorboat and these are pleasure crafts, most preferably the vessel is a sailing vessel. Sailing vessels are designated by size in feet. Preferably, the sailing vessel is at least 30 feet in size, preferably at least 60 feet in size, more preferably at least 90 feet in size.

According to another embodiment, the sailing vessel is between 150 feet and 30 feet in size, preferably the sailing vessel is between 120 feet and 35 feet in size, more preferably the sailing vessel is between 110 feet and 45 feet in size, most preferably the sailing vessel is between 110 feet and 50 feet in size. Depending on the size the construction will differ as larger boats may carry higher weights.

Of course, both the moveable deck portion (2) and the transom portion (4) close watertight.

According to another aspect, the invention relates to a door system in a stern portion of a vessel preferably a sailing vessel (1-Fig.10) comprising:
a. a first platform element (2-Fig.10) comprising a portion of the deck of the vessel (3-Fig.10),
b. a second platform element (4-Fig.10) comprising a portion of the transom of the vessel (5-Fig.10) connected by a system of hinges (35, 45), connecting,
   i. the first platform element (2-Fig.10) to the second platform element (4-Fig.10),
   ii. the second platform element (4-Fig.10) to a portion of a hull in an aft position of the vessel (6-Fig.10), wherein the system of hinges (35-Fig.9A) comprises a first member (26-Fig.9A) pivotally connected to a second member (27-Fig.9A) by means of a tubular shaft (24-Fig.9B), wherein the first member (26-Fig.9A) comprises a first protrusion (20-Fig.9B) and the second member (27-Fig.9A) comprises a second protrusion (21-Fig.9B), wherein the first member (26-Fig.9A) is a fixed member and the second member (27-Fig.9A) is a movable member, wherein the first protrusion (20-Fig.9B) and the second protrusion (21-Fig.9B) determine the opening of the system of hinges (35-Fig.9A) to about 90 degrees.

The invention also relates to a door system in a stern portion of a vessel preferably a sailing vessel (1) comprising:
a. a first platform element (2) comprising a portion of the deck of the vessel (3),
b. a second platform element (4) comprising a portion of the transom of the vessel (5), connected by a system of hinges (35, 45) connecting:
   i. the first element (2) to the second element (4),
   ii. the second element (4) to a portion of a hull in an aft position of the vessel (6), wherein the system of hinges (35-Fig.9A) comprises a first member (26-Fig.9A) pivotally connected to a second member (27-Fig.9A) by means of a tubular shaft (24-Fig.9B), wherein the first member (26-Fig.9A) comprises a first protrusion (20-Fig.9B) and the second member (27-Fig.9A) comprises a second protrusion (21-Fig.9B), wherein the first member (26-Fig.9A) is a fixed member and the second member (27-Fig.9A) is a movable member, wherein the first element (2) in a closed position forms a planar surface with the deck of the vessel (3) and in an open position forms a planar surface with the second element (4), wherein the second element (4) in a closed position forms a planar surface with the transom of the vessel (5) and in an open position forms a planar surface with a floor (41) in an aft position of the vessel.

Preferably, the second member (27- Fig. 9A, 9B) of the system of hinges (35-Fig.9A) further comprises a third protrusion (23) to attach an actuator cylinder for rotating the first element and opening it to an angle of about 90 degrees.

In the context of the present invention, the expression "about 90 degrees" encompasses different degree angles which depend on the geometry of the vessel, in particular the position of the first platform element (2) in connection with the second platform element (4) and the position of the second platform element (4) in connection with the floor (41) in an aft position of the vessel.

Therefore, the expression "about 90 degrees" refers to any degree angles between 60 and 130, preferably between 70 and 120, more preferably between 80 and 110 degrees.

When the first element (2) is completely opened, it forms a planar surface with the second element (4). When the second element (4) is completely opened, it forms a planar surface with a floor (41) in an aft position of the vessel.

Ideally, the system of hinges (35-Fig.9A) is designed to enable rotation within a single plane.

The first platform element (2-Fig.10) is operable independently to the second platform element (4) and/or the second platform element (4-Fig.10) is operable when the first platform element (2) is an open position.

Preferably, the first element (2-Fig. 10) and/or the second element (4-Fig. 10) is/are manually or automatically operable.

The first element (2-Fig. 11) rotates by 90 degrees by means of one or more cylinders (30-Fig. 11). Of course, these must not always be exactly 90 degrees. Some transoms are not vertical. The angle could then change.

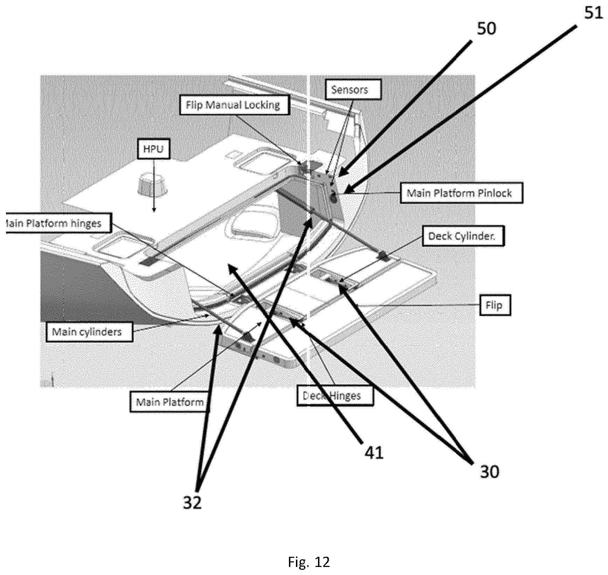

Ideally, the one or more cylinders (30-Fig. 12) are inside the second element (4-Fig. 11). This is one of the most important aspects of the present invention and took months of inventive effort to accomplish this. Many attempts failed.

The second element (4-Fig.10) is operated by means of a second pair of cylinders (32-Fig. 12).

The second pair of cylinders (32-Fig. 12), upon activation, allows the opening of the second element (4-Fig.10).

Of course, it is ideal if the first element (2) and second (4-Fig.10) element in an open position form a planar platform. Due to the present invention this is then one bathing platform.

In the door system in a stern portion of a vessel (1-Fig. 10) the first element (2-Fig.10) and second (4-Fig.10) element are in an open position, the planar platform (Fig. 5) is preferably above a sea level.

In the door system in a stern portion of a vessel (1-Fig. 10) the portion of a hull in an aft position of the vessel (6-Fig.10) is a lazarette floor (41-Fig. 12). Here, it is possible to store items or actually when all is open also do sunbathing.

### DESCRIPTION OF THE FIGURES

Fig. 1 shows a prior art bathing platform. Here, the platform is substantially the transom and slanted when non-deployed.
Fig. 2 shows a prior art bathing platform. It is for small motorboats and part of the platform is created by using the cover from the outboard engine.
Fig. 3 shows a prior art bathing platform of a large sailing vessel. The transom forms the platform. The deck is closed. Behind the transom is a "garage" like structure.
Fig. 4 shows a structure of a stern (1) of a vessel according to the present invention, comprising a fixed part (6) configured as a stern portion of said vessel and, comprising a first fixed deck portion (3), and a movable second deck portion (2), (a) wherein the movable second deck portion (2) is pivotally connectable to the transom portion (4), which in turn at its base is pivotally connected to the fixed part (6) of the vessel, (b) wherein the transom portion (4) may be pivotally folded away to a horizontal position either together with said movable second deck portion (2) or separate of said second deck portion depending on whether the connection between the movable second deck portion (2) and the transom portion (4) is in place or not in place, (c) wherein if both transom portion (4) and the moveable second deck portion (2) are lowered together, they form a large platform, and (d) wherein if the transom portion (4) is not connected to said moveable second deck portion (2) and only the transom portion (4) is lowered it forms a smaller platform. In this figure the platform is closed. It shows also how large the portion of the moveable deck is.
Fig. 5 shows a structure of a stern (1) of a vessel according to the present invention. In this figure the platform is open. It shows also how large the portion of the moveable deck is and how with the transom together it forms a large platform. It is not shown but the movable second deck portion (2) may be lowered more or less than the transom portion (4) in order to create different levels. It is shown here also that the platform for bathing has "hidden" mechanics. Only this allows a proper use of the bathing platform. The mechanics that rotate the movable second deck portion (2) are not visible to the eye. (6) indicates the stern fixed part. (9) indicates the sensor system. (41) indicates the lazarette.

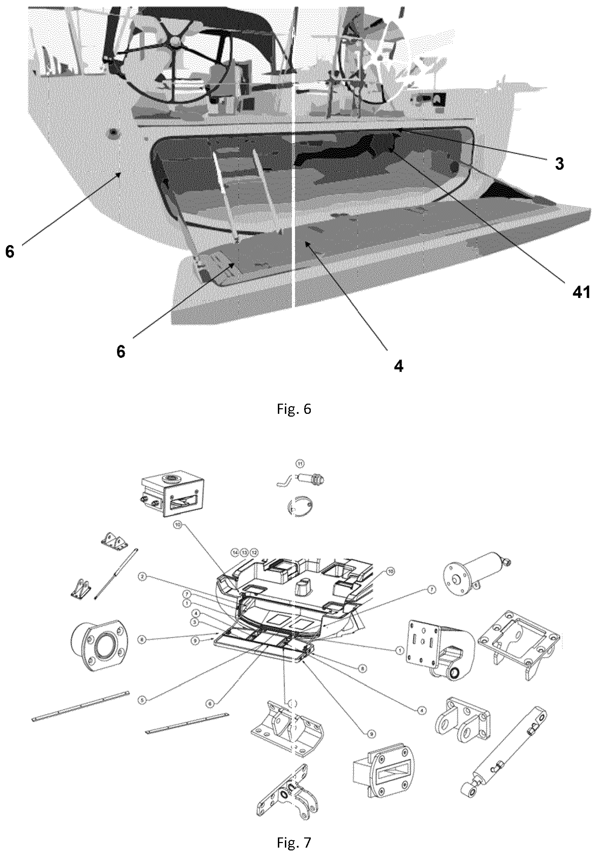

Fig. 6 shows a structure of a stern (6) of a vessel according to the present invention. In this figure the transom portion (4) only is open. An aft "garage" (41) which is cave-like is created. This is only an option, and such bathing platforms are known from the prior art. This set-up is ideal for launching the dinghy. It would only be an option for the present invention and is not preferred.
Fig. 7 shows a structure of a stern in an open position. In Fig. 7 (1) designates the main hinges, (2) the main cylinder, (3) the deck hinges, (4) deck cylinder, (5) main platform reaction plate, (6) platform reaction plate, (7) pinlocks, (8) hatch fitting pinlock, (9) deck hatch manual fitting, (10) manual fittings, (11) sensors, (12) HPU, (13) electrical cabinet, and (14) the control panel. The material has been designated as AISI 316 where used which is the case for items (1) to (10). Hence, in a preferred embodiment the parts (1) to (10) are AISI 316 and AISI 316L. This describes stainless, austenitic chromium-nickel-molybdenum steels which have good resistance in non-oxidizing acids and chlorine-containing media. Due to the chemical composition, the material 316 and the material 316L are inherently corrosion resistant metal alloys. The inventors have found these to be particularly suited for the designated parts. One of the very difficult aspects to solve of the present invention was the problem of rotating the movable second deck portion (3) from the transom portion (4) (see Fig. 5). Initial experiments involved various set-ups, all of which had the drawback that the bathing platform was not free to use and was in fact dangerous, as parts were sticking out, e.g., the main cylinders readily visible. Small deck cylinders (30) spaced into the platforms (see, Figs. 11 and 12) make it possible to rotate the movable second deck portion (3) away from the transom portion (4)(Fig. 5) without causing a dangerous situation. Therefore, it was necessary to attach the main cylinders to the platform (Fig.5).
Fig. 8A shows the transom extension hinge as it was used in a first attempt to develop the present inventive boat stern, with (26) designating the hinge as it is bolted to the transom side, (23) the receptacle for the tubular shaft (24), (21) (20) the extension stops, which ensures that when the platform is lowered a horizontal bathing platform results, (23) the receptacle for the tubular shaft (24), and (27) attachment to the extension platform. The receptacle for the tubular shaft (24) is scored. While under normal circumstances it might have been possible to use this hinge, the inventors turned out to be impossible to use the hinge in the present case. Due to the fact that various new movements of the transom are necessary and due to the fact that the platform must be void of interruptions over which one may stumble or fall this hinge turned out to be problematic. It would have in particular required a further cylinder which would have been visible and would have created a stumbling block for the user. Also, the mechanics would have been large and it would have been impossible to hide these within the platform.
Fig. 8B shows the transom extension hinge as it was used in a first attempt to develop the present inventive boat stern (25), with (26) designating the hinge as it is bolted to the transom side, (23) the receptacle for the tubular shaft (24), (21) (20) the extension stops, which ensures that when the platform is lowered a horizontal bathing platform results, (23) the receptacle for the tubular shaft (24), and (27) attachment to the extension platform. The receptacle for the tubular shaft (24) is scored. Figure 8B shows the same hinge as figure 8A. The system of hinges (25) of Fig. 8 can be used as support of the actuated hinges (35) in a sailing vessel ranging between at least 90 and 150 feet in size.
Figure 9(A-B) shows the inventive hinge which connects the movable second deck portion or first element (2) to the transom portion or second element (4).
Figure 10 shows the door system in a stern portion of a vessel (1), wherein the first element (2) and/or the second element (4) is/are manually or automatically operable.
Fig. 11 shows the hinge actually forms a triangular shape. The entire bathing platform when horizontally above the water comprises 2 axes and comprises 2 actuators, the more important actuator is actually attached directly to the hinge connecting the transom and the second element. The larger actuator folds out the transition to a horizontal playing. It is not part of a hinge. The hinge connecting that transom and the vessel is separate. Whereas the hinge connecting the second element and that transom that forms the horizontal debating platform is connected directly to the small cylinders which open the second element and thereby create a horizontal bathing platform. Importantly, the small act waiters which are connected directly to the hinge which has a triangular form are hidden together in the transom and the second element.
Fig. 12 shows the main cylinder (32) connected to the vessel. (30) indicates the hidden cylinders within the transom. (41) shows the lazarette. While in figure 11 the cylinders are visible in real life these cylinders are hidden under a cover. The platform may be unfolded without visibility of any mechanical means.
Fig. 13 shows the door system in a stern portion of a vessel according to the present invention.

## Claims

1. A door system in a stern portion of a vessel preferably a sailing vessel (1) comprising:
a. a first platform element (2) comprising a portion of the deck of the vessel (3),
b. a second platform element (4) comprising a portion of the transom of the vessel (5), connected by a system of hinges (35, 45) connecting:
i. the first element (2) to the second element (4),
ii. the second element (4) to a portion of a hull in an aft position of the vessel (6), wherein the system of hinges (35) comprises a first member (26) pivotally connected to a second member (27) by means of a tubular shaft (24), wherein the first member (26) comprises a first protrusion (20) and the second member (27) comprises a second protrusion (21), wherein the first member (26) is a fixed member and the second member (27) is a movable member, wherein the first protrusion (20) and the second protrusion (21) determine the opening of the system of hinges (35) to about 90 degrees.

2. The door system in a stern portion of a vessel (1) according to claim 1, wherein the second member (27) of the system of hinges (35) further comprises a third protrusion (23) to attach an actuator cylinder for rotating the first element and opening it to an angle of about 90 degrees.

3. The door system in a stern portion of a vessel (1) according to any of the claims 1 and 2, wherein the system of hinges (35) is designed to enable rotation within a single plane.

4. The door system in a stern portion of a vessel (1) according to any of the claims 1 to 3, wherein the first element (2) is operable independently to the second element (4) and/or the second element (4) is operable when the first element (2) is an open position.

5. The door system in a stern portion of a vessel (1) according to any of the claims 1 to 4, wherein the first element (2) and/or the second element (4) is/are manually or automatically operable.

6. The door system in a stern portion of a vessel (1) according to any of the claims 1 to 5, wherein the first element (2) rotates by 90 degrees by means of one or more cylinders (30).

7. The door system in a stern portion of a vessel (1) according to any of the claims 1 to 6, wherein the one or more cylinders (30) are inside the second element (4).

8. The door system in a stern portion of a vessel (1) according to any of the claims 1 to 7, wherein the second element (4) is operated by means of a second pair of cylinders (32).

9. The door system in a stern portion of a vessel (1) according to any of the claims 1 to 8, wherein the second pair of cylinders (32), upon activation, allow the opening of the second element (4).

10. The door system in a stern portion of a vessel (1) according to any of the claims 1 to 9, wherein the first element (2) and second (4) element in an open position form a planar platform.

11. The door system in a stern portion of a vessel (1) according to any of the claims 1 to 10, wherein, when the first element (2) and second (4) element are in an open position, the planar platform is above a sea level.

12. The door system in a stern portion of a vessel (1) according to any of the claims 1 to 11, wherein the portion of a hull in an aft position of the vessel (6) is a lazarette floor (41).

## Patentansprüche

1. Ein Türsystem im Heckbereich eines Schiffes, vorzugsweise eines Segelschiffes (1), umfassend:
a. ein erstes Plattformelement (2), das einen Teil des Decks des Schiffes (3) umfasst,
b. ein zweites Plattformelement (4), das einen Teil des Heckbalkens des Schiffes (5) umfasst, verbunden durch ein System von Scharnieren (35, 45), die:
i. das erste Element (2) mit dem zweiten Element (4) verbinden,
ii. das zweite Element (4) mit einem Teil des Rumpfes in einer hinteren Position des Schiffes (6) verbinden, wobei das Scharniersystem (35) ein erstes Element (26) umfasst, das mittels einer röhrenförmigen Welle (24) schwenkbar mit einem zweiten Element (27) verbunden ist, wobei das erste Element (26) einen ersten Vorsprung (20) und das zweite Element (27) einen zweiten Vorsprung umfasst (21) umfasst, wobei das erste Element (26) ein festes Element und das zweite Element (27) ein bewegliches Element ist, wobei der erste Vorsprung (20) und der zweite Vorsprung (21) die Öffnung des Scharniersystems (35) auf etwa 90 Grad festlegen.

2. Das Türsystem im Heckbereich eines Schiffes (1) gemäß Anspruch 1, wobei das zweite Element (27) des Scharniersystems (35) ferner einen dritten Vorsprung (23) umfasst, um einen Betätigungszylinder anzubringen, der das erste Element dreht und es bis zu einem Winkeln von etwa 90 Grad öffnet.

3. Das Türsystem im Heckbereich eines Schiffes (1) gemäß einem der Ansprüche 1 und 2, wobei das Scharniersystem (35) so ausgelegt ist, dass es eine Drehung innerhalb einer einzigen Ebene ermöglicht.

4. Das Türsystem im Heckbereich eines Schiffes (1), gemäß einem der Ansprüche 1 bis 3, wobei das erste Element (2) unabhängig von dem zweiten Element (4) betätigbar ist und/oder das zweite Element (4) betätigbar ist, wenn sich das erste Element (2) in einer offenen Position befindet.

5. Das Türsystem im Heckbereich eines Schiffes (1) gemäß einem der Ansprüche 1 bis 4, wobei das erste Element (2) und/oder das zweite Element (4) manuell oder automatisch betätigbar sind.

6. Das Türsystem im Heckbereich eines Schiffes (1) gemäß einem der Ansprüche 1 bis 5, wobei das erste Element (2) mittels eines oder mehrerer Zylinder (30) um 90 Grad gedreht wird.

7. Das Türsystem im Heckbereich eines Schiffes (1) gemäß einem der Ansprüche 1 bis 6, wobei sich der eine oder die mehreren Zylinder (30) innerhalb des zweiten Elements (4) befinden.

8. Das Türsystem im Heckbereich eines Schiffes (1) gemäß einem der Ansprüche 1 bis 7, wobei das zweite Element (4) mittels eines zweiten Zylinderpaares (32) betätigt wird.

9. Das Türsystem im Heckbereich eines Schiffes (1) gemäß einem der Ansprüche 1 bis 8, wobei das zweite Zylinderpaar (32) bei der Aktivierung das Öffnen des zweiten Elements (4) ermöglicht.

10. Das Türsystem im Heckbereich eines Schiffes (1) gemäß einem der Ansprüche 1 bis 9, wobei das erste Element (2) und das zweite Element (4) in geöffneter Position eine ebene Plattform bilden.

11. Das Türsystem im Heckbereich eines Schiffes (1) gemäß einem der Ansprüche 1 bis 10, wobei sich die ebene Plattform in einer offenen Position des ersten Elements (2) und des zweiten Elements (4) über dem Meeresspiegel befindet.

12. Das Türsystem im Heckbereich eines Schiffes (1) gemäß einem der Ansprüche 1 bis 11, wobei der Bereich eines Rumpfes in einer hinteren Position des Schiffes (6) ein Lazarettboden (41) ist.

## Revendications

1. Système de porte dans une partie arrière d'un navire, de préférence un voilier (1), comprenant:
a. un premier élément de plate-forme (2) comprenant une partie du pont du navire (3),
b. un deuxième élément de plate-forme (4) comprenant une partie du tableau arrière du navire (5), reliés par un système de charnières (35, 45) reliant :
i. le premier élément (2) au deuxième élément (4),
ii. le deuxième élément (4) à une partie de la coque dans une position arrière du navire (6), dans lequel le système de charnières (35) comprend un premier élément (26) relié de manière pivotante à un deuxième élément (27) au moyen d'un arbre tubulaire (24), dans lequel le premier élément (26) comprend une première saillie (20) et le deuxième élément (27) comprend une deuxième saillie (21), dans lequel le premier élément (26) est un élément fixe et le deuxième élément (27) est un élément mobile, dans lequel la première saillie (20) et la deuxième saillie (21) déterminent l'ouverture du système de charnières (35) à environ 90 degrés.

2. Système de porte dans une partie arrière d'un navire (1) selon la revendication 1, dans lequel le premier élément (26) du système de charnières (35) comprend en outre une troisième saillie (23) pour fixer un vérin d'actionnement afin de faire pivoter le premier élément et de l'ouvrir à un angle d'environ 90 degrés.

3. Système de porte dans la partie arrière d'un navire (1) selon l'une quelconque des revendications 1 et 2, dans lequel le système de charnières (35) est conçu pour permettre une rotation dans un seul plan.

4. Système de porte dans une partie arrière d'un navire (1) selon l'une quelconque des revendications 1 à 3, dans lequel le premier élément (2) peut être actionné indépendamment du deuxième élément (4) et/ou le deuxième élément (4) peut être actionné lorsque le premier élément (2) est en position ouverte.

5. Système de porte dans une partie arrière d'un navire (1) selon l'une quelconque des revendications 1 à 4, dans lequel le premier élément (2) et/ou le deuxième élément (4) peut/peuvent être actionné(s) manuellement ou automatiquement.

6. Système de porte dans une partie arrière d'un navire (1) selon l'une quelconque des revendications 1 à 5, dans lequel le premier élément (2) pivote de 90 degrés au moyen d'un ou plusieurs vérins (30).

7. Système de porte dans une partie arrière d'un navire (1) selon l'une quelconque des revendications 1 à 6, dans lequel le ou les vérins (30) se trouvent à l'intérieur du deuxième élément (4).

8. Système de porte dans une partie arrière d'un navire (1) selon l'une quelconque des revendications 1 à 7, dans lequel le deuxième élément (4) est actionné au moyen d'une deuxième paire de vérins (32).

9. Système de porte dans une partie arrière d'un navire (1) selon l'une quelconque des revendications 1 à 8, dans lequel la deuxième paire de vérins (32), lorsqu'elle est activée, permet l'ouverture du deuxième élément (4).

10. Système de porte dans une partie arrière d'un navire (1) selon l'une quelconque des revendications 1 à 9, dans lequel le premier élément (2) et le deuxième élément (4) forment une plate-forme plane lorsqu'ils sont en position ouverte.

11. Système de porte dans une partie arrière d'un navire (1) selon l'une quelconque des revendications 1 à 10, dans lequel, lorsque le premier élément (2) et le deuxième élément (4) sont en position ouverte, la plate-forme plane se trouve au-dessus du niveau de la mer.

12. Système de porte dans une partie arrière d'un navire (1) selon l'une quelconque des revendications 1 à 11, dans lequel la partie de la coque située à l'arrière du navire (6) est un plancher de cambuse (41).
